# EUROPÄISCHE PATENTANMELDUNG

(11) **EP 3 796 496 A1**
(43) Veröffentlichungstag der Anmeldung: **24.03.2021**
(21) Anmeldenummer: 20000334.1
(22) Anmeldetag: 18.09.2020
(51) Int. Cl.: H02G 3/04, F21V 33/00, F21V 21/088

(54) **KABELRINNE MIT GERÄTETRÄGER UND BELEUCHTUNGSMITTEL**

(30) Priorität: 20.09.2019 DE 102019006616; 21.04.2020 DE 102020002404
(71) Anmelder: PUK Group GmbH & Co. KG, 12057 Berlin (DE)
(72) Erfinder: Ganter, Philipp, D-79100 Freiburg (DE); Rehn, Alexander, Benjamin, D-80336 München (DE); Pohl, Jurij, D-14197 Berlin (DE); Schubert, Karl, D-10439 Berlin (DE)
(74) Vertreter: Jungblut & Seuss

(57) **Zusammenfassung**

Die Erfindung betrifft eine Kabelrinne (1) mit einem Kabelrinnenboden (2) und zwei Kabelrinnenschenkel (3, 4), wobei der Kabelrinnenboden (2) und die Kabelrinnenschenkel (3, 4) im Querschnitt U-förmig ausgebildet sind, wobei ein elektrische Gerät (5), insbesondere ein Beleuchtungsmittel (5), an oder in der Kabelrinne (1) angebracht ist. Sie ist dadurch gekennzeichnet, dass das elektrische Gerät (5) in oder an einem Geräteträger (6) angeordnet ist, und dass der Geräteträger (6) kraft- und/oder formschlüssig mit den Kabelrinnenschenkeln (3, 4) reversibel verbindbar ist.

## Beschreibung

### Gebiet der Erfindung.

Die Erfindung betrifft eine Kabelrinne mit einem Kabelrinnenboden und zwei Kabelrinnenschenkel, wobei der Kabelrinnenboden und die Kabelrinnenschenkel im Querschnitt U-förmig ausgebildet sind, wobei ein elektrisches Gerät an oder in der Kabelrinne angebracht ist.

### Hintergrund der Erfindung und Stand der Technik.

Insbesondere in gewerblich genutzten Räumlichkeiten kommen frei liegende Kabelrinnen zum Einsatz, in welchen Kabel der elektrischen Stromversorgung, der Telekommunikation und/oder der Datentechnik geführt werden.

In solchen Räumlichkeiten sind des Weiteren in aller Regel beispielsweise auch Beleuchtungsmittel eingerichtet mit welchen die Räumlichkeit direkt oder indirekt ausgeleuchtet wird.

Typischerweise werden dafür die Beleuchtungsmittel an der Decke oder an Wänden der Räumlichkeit angebracht und es werden von Verteilern Stromleitungen zu diesen Beleuchtungsmittels verlegt, offen oder verdeckt.

Dies ist in Hinblick auf die Installation der Beleuchtungsmittel aufwändig, insbesondere auch aufgrund der notwendigen Verlegung von Stromversorgungsleitungen zu den Beleuchtungsmitteln hin.

Analoges gilt für elektrische Geräte, welche keine Beleuchtungsmittel sind.

Aus der Literaturstelle US 9,841,179 B2 ist eine Kabelrinne bekannt, bei welcher Beleuchtungsmittel in den Boden einer Kabelrinne integriert sind. Damit wird zwar erreicht, dass eine aufwändige Verlegung von Stromversorgungsleitungen entfallen kann, jedoch weist diese Technologie eine Reihe noch Nachteilen auf. Zum Ersten ist die Herstellung der Kabelrinnen komplex und folglich teuer. Zum Zweiten muss das Beleuchtungskonzept vor der Herstellung der Kabelrinnen und vor der Montage derselben erstellt werden. Zum Dritten sind nach der Montage keine Änderungen des Beleuchtungskonzepts mehr möglich. Zum Vierten können keine standardisierten Kabelrinnen, welche in hohen Stückzahlen und niedrigen Preisen verfügbar sind, eingesetzt werden.

### Technisches Problem der Erfindung.

Der Erfindung liegt daher das technische Problem zu Grunde, eine Kabelrinne mit elektrischem anzugeben, wobei eine Standard-Kabelrinne eingesetzt wird, wobei die Montage des elektrischen Gerätes nach der Montage der Kabelrinne erfolgen kann, wobei das Anordnungskonzept, beispielsweise das Beleuchtungskonzept, auch nach der Montage der Kabelrinne sowie der Beleuchtungsmittel flexibel und veränderbar ist.

### Grundzüge der Erfindung und bevorzugte Ausführungsformen.

Zur Lösung dieses technischen Problems lehrt die Erfindung, dass das elektrische Gerät in oder an einem Geräteträger angeordnet ist, und dass der Geräteträger kraft- und/oder formschlüssig mit den Kabelrinnenschenkeln reversibel verbindbar ist.

Mit der Erfindung wird erreicht, dass übliche und somit kostengünstige Kabelrinnen eingesetzt und montiert werden können. An diese Kabelrinnen wird der Geräteträger an einer gewünschten Position einfach "angeklickt" und somit montiert (selbstverständlich ist ggf. noch ein Anschluss an eine beispielsweise in der Kabelrinne liegende Stromversorgungsleitung durchzuführen). Insbesondere ist es möglich diese Position frei zu wählen und auch im Nachhinein zu verändern (und sei es nur als leichte Positionskorrektur), und zwar unter Wiederverwendung der bereits eingesetzten elektrischen Geräte und Geräteträger. Dies erlaubt eine hohe Flexibilität bei der Planung und auch bei späterem Betrieb, und zwar zu minimalen Kosten. Schließlich erlaubt die Erfindung die Nachrüstung von bereits vorhandenen Kabelrinnen mit elektrischen Geräten, so dass die separate und aufwändige Montage von Beleuchtungsmitteln an der Decke einer Räumlichkeit oder der Wände derselben nicht notwendig ist.

Als elektrische Geräte kommen neben Beleuchtungsmitteln auch Lautsprecher, beleuchtete Schilder, Rauchmelder, Bewegungssensoren, Temperatursensoren, Anschlusskabel für solche Geräte, usw. in Frage. Beispielsweise kann das elektrische Gerät eine Kabeltrommel sein, wobei an das freie Ende des Kabels eines der beispielshaft genannten anderen Geräte anschließbar oder angeschlossen sein kann, beispielsweise ein Beleuchtungsmittel.

Im Einzelnen bestehen die folgenden Möglichkeiten der weiteren Ausbildung.

Für den Geräteträger bestehen mannigfaltige Möglichkeiten der weiteren Ausbildung. Bevorzugt ist es, wenn der Geräteträger im Querschnitt senkrecht zur Längserstreckung der Kabelrinne vorzugsweise U- oder V-förmig mit einem Geräteträgerboden und zwei Geräteträgerschenkeln ausgebildet ist, wobei die Geräteträgerschenkel in den Bereichen ihrer freien Enden zum Anliegen an die Kabelrinnenschenkel ausgebildet sind, wobei das elektrische Gerät im oder an dem Geräteträgerboden angeordnet ist, und wobei die Geräteträgerschenkel mit den Kabelrinnenschenkel kraft- und/oder formschlüssig (reversibel) verbunden sind. Kraftschluss wird beispielsweise dadurch erreicht, dass die Geräteträgerschenkel leicht zueinander vorgespannt sind, so dass sie zum Aufschieben auf die Kabelrinnenschenkel etwas gegen diese Vorspannkraft aufgebogen werden müssen. Formschluss wird beispielsweise dadurch erreicht, dass die Kabelrinnenschenkel und die Geräteträgerschenkel zueinander komplementäre Formschlussausnehmungen und Formschlussvorsprünge aufweisen. Zwischenformen sind dadurch gekennzeichnet, dass beispielsweise die Formschlussvorsprünge Schrägen aufweisen, welche die Lösung der Verbindung erlauben, beispielsweise gegen die Vorspannkraft der Geräteträgerschenkel. Eine Formschlussverbindung zwischen Geräteträger und Kabelrinne kann aber auch beispielsweise durch Verschrauben eingerichtet sein.

Alternativ kann der Geräteträger auch lediglich aus einem der vorstehend beschriebenen Geräteträgerschenkel bestehen, i.e. es liegt lediglich ein solcher Geräteträgerschenkel vor, während eine Geräteträgerboden nicht vorgesehen ist. Dann kann dieser eine Geräteträgerschenkel beispielsweise in einen Kabelrinnenschenkel eingehängt werden. Das elektrische Gerät ist dann entweder seitlich am Geräteträgerschenkel oder an dessen unterem Ende angebracht.

Mit der Erfindung kann in der Ausführungsform eines Beleuchtungsmittels eine direkte oder eine indirekte Beleuchtung realisiert werden. Der Geräteträgerboden kann unterhalb des Kabelrinnenbodens angeordnet sein, wobei die Abstrahlrichtung des Beleuchtungsmittels vom Kabelrinnenboden weg nach unten weist. Dann handelt es sich um eine direkte Beleuchtung. Der Geräteträgerboden kann oberhalb von freien Enden der Kabelrinnenschenkel angeordnet sein, wobei die Abstrahlrichtung des Beleuchtungsmittels vom Kabelrinnenboden weg nach oben weist. Dann handelt es sich um eine indirekte Beleuchtung.

Bevorzugt werden handelsübliche Kabelrinnen verwendet, wobei die Kabelrinnenschenkel benachbart zu den freien Enden der Kabelrinnenschenkel und in Längsrichtung der Kabelrinne jeweils zumindest eine zum Innenraum der Kabelrinne weisende Kabelrinnensicke aufweisen. Diese dienen der mechanischen Aussteifung der Kabelrinne in Längsrichtung. Dann ist eine erste Variante eines Geräteträgers dadurch gekennzeichnet, dass die Geräteträgerschenkel benachbart zu den freien Enden der Geräteträgerschenkel und in Längsrichtung der Kabelrinne jeweils zumindest eine zum Innenraum des Geräteträgers weisende Geräteträgersicke aufweisen, wobei die Innenseiten der Geräteträgersicken in die Außenseiten der Kabelrinnensicken eingreifen. Alle vorstehend angesprochenen Sicken sind typischerweise mit schräg verlaufenden Sickenwandungen ausgebildet, so dass der Geräteträger sich zwar auf die Kabelrinne "auf klicken", aber sich auch wieder gegen die Vorspannkraft der Geräteträgerschenkel entfernen und/oder in Längsrichtung der Kabelrinne verschieben lässt. Eine weitere Variante eines Geräteträgers ist dadurch gekennzeichnet, dass die Geräteträgerschenkel benachbart zu den freien Enden der Geräteträgerschenkel zumindest jeweils eine zum Innenraum des Geräteträgers weisende konvexe Ausformung aufweisen, wobei die nach innen weisenden Ausformungen in die Außenseiten der Kabelrinnensicken oder in Ausnehmungen in den Kabelrinnenschenkel eingreifen. Eine solche Ausformung kann beispielsweise Kalotten-förmig sein, jedoch sind hier beliebige Formen möglich, sofern sie zum Eingreifen in die Kabelrinnensicken oder Ausnehmungen der Kabelrinnenschenkel geeignet und entsprechend dimensioniert und geformt sind. Andere Formen umfassen beispielsweise eine stumpfe oder spitze Kegelform, wobei die Mantellinien nicht nur geradlinig, sondern auch konvex oder konkav verlaufend sein können. Bei solchen Ausformungen, welche typischerweise eine nur geringe Erstreckung in Richtung der Längserstreckung der Kabelrinne aufweisen, wird es sich vorteilhafterweise empfehlen, zumindest 2 Ausformungen, beispielsweise 2 Ausformungen, pro Geräteträgerschenkel vorzusehen, da damit-dann ein Kippeln des Geräteträgers auf der Kabelrinne vermieden wird.

Insbesondere in den Varianten eines Geräteträgers mit einem Geräteträgerboden und zwei Geräteträgerschenkeln, mit Geräteträgersicken oder Ausformungen in den Geräteträgerschenkeln und mit U-förmigen Abkantungen an den freien Enden der Geräteträgerschenkel, kann vorteilhaft eine besondere Dimensionierung von Komponenten vorgesehen sein. So kann eine Umgreifungslänge L1 gleich oder kleiner einer Abstandslänge L2 sein, wobei die Umgreifungslänge L1 durch die Länge L1 der innenliegenden Schenkel der U-förmigen Abkantungen an den freien Enden der Geräteträgerschenkel, im Querschnitt orthogonal zur Längserstreckung der Kabelrinne betrachtet, und die Abstandslänge L2 durch den minimalen Abstand L2 einer Oberseite des Geräteträgerbodens zu einer Unterseite des Kabelrinnenbodens, im Querschnitt orthogonal zur Längserstreckung der Kabelrinne betrachtet, gegeben ist. Die Montage erfolgt dann so, dass die Geräteträgerschenkel (in der Regel gegen die Federkraft des Materials, aus welchem der Geräteträger gefertigt ist) an ihren freien Ende aufgebogen und der Geräteträger über die Kabelrinne aufgeschoben wird bis der Geräteträgerboden bzw. seine Oberseite an dem Kabelrinnenboden bzw. dessen Unterseite anschlägt. Dann passen die innenliegenden Schenkel der U-förmigen Abkantungen an den freien Enden der Geräteträgerschenkel über die freien Enden der Kabelrinnenschenkel und die Geräteträgerschenkel können aus der (typischerweise) federnden Aufbiegung entspannt oder zurück gebogen werden. Schließlich wird der Geräteträger nach unten gegenüber der Kabelrinne gezogen mit der Folge, dass einerseits die innenliegenden Schenkel der U-förmigen Abkantungen an den freien Enden der Geräteträgerschenkel die freien Enden der Kabelrinnenschenkel umfassen und andererseits die Geräteträgersicken oder Ausformungen in den Geräteträgerschenkeln in die Kabelrinnensicken einrasten bzw. einschnappen.

Ein besonderer Vorteil aller vorstehenden Varianten ist, dass der Geräteträger werkzeuglos montiert, demontiert und/oder auf der Kabelrinne verschoben werden kann. So kann der Geräteträger werkzeuglos von unten in die Kabelrinne eingeklinkt werden und dabei umschließen die Geräteträgerschenkel die Kabelrinne, können insbesondere auch die oberen Enden der Kabelrinnenschenkel umfassen. Durch die beschriebenen Sicken und Ausformungen wird der Geräteträger zusätzlich rastend fixiert, und zwar in Richtungen senkrecht zur Längserstreckung der Kabelrinne und/oder parallel hierzu.

Ebenso lässt sich die Erfindung grundsätzlich in allen Varianten aber auch im Rahmen von Kabelrinnen verwenden, welche solche Kabelrinnensicken nicht aufweisen, demgegenüber jedoch in den Kabelrinnenschenkeln Durchbrüche, vorzugsweise in Form von Rund- oder Langlöchern, beispielsweise in Richtung der Längserstreckung der Kabelrinne oder orthogonal dazu orientiert, eingerichtet sind.

In einer beispielhaften Ausführungsform für sickenlose Kabelrinnen ist die Ausbildung und Anordnung von vorstehend beschriebenen Ausformungen an den Geräteträgerschenkeln mit der Maßgabe erfolgt, dass die Ausformungen anstatt in eine Sicke in Durchbrüche der beiden Kabelrinnenschenkel eingreifen bzw. sich auf rasten lassen. Die meisten handelsüblichen Kabelrinnen weisen eine Vielzahl von Durchbrüchen in den Kabelrinnenschenkel auf, so dass auch in dieser Variante solche handelsüblichen Kabelrinnen ohne Änderungen eingesetzt werden können. Diese Variante der Erfindung ist natürlich auch bei Kabelrinnen mit Sicken und Durchbrüchen in den Kabelrinnenschenkeln einsetzbar, unabhängig von den Sicken der Kabelrinnenschenkel.

Kabelrinnen und Geräteträger können grundsätzlich aus allen fachüblichen Materialien bestehen, gleich oder verschieden. In Frage kommen beispielsweise Kunststoffe oder Metalle, wie beispielsweise Stahl, im Falle von korrosionsanfälligen Stählen vorzugsweise verzinkt.

Insbesondere im Fall von Beleuchtungsmitteln oder sonstigen elektrischen Geräten mit hohem Gewicht kann es wünschenswert sein, Formschlussverbindungen vorzusehen, zusätzlich zu der eher kraftschlüssigen Verbindung, wie mit den Sicken vorstehender Bauart, oder allein. Im einfachsten Fall weisen die freien Enden der Geräteträgerschenkel jeweils eine nach innen weisende Abkantung auf (um zumindest 90°), welche die freien Enden der Kabelrinnenschenkel übergreift oder umgreift. Auch diese Verbindung ist dadurch lösbar, dass die Geräteträgerschenkel soweit (elastisch) auf biegbar sind, dass die Abkantungen frei von den Kabelrinnenschenkel sind und so der Geräteträger senkrecht zur Längserstreckung der Kabelrinne abgenommen werden kann, wie in anderen Varianten auch. Es versteht sich dabei, dass die Erstreckung der Abkantung dabei keine Dimensionen erreicht, welche ein elastisches Aufbiegen der Geräteträgerschenkel in ausreichendem Maße zwecks Demontage verhindert. Ebenso können die Geräteträgerschenkel mittels Schraub- oder Nietverbindungen, Klebverbindungen, oder Magnetverbindungen mit den Kabelrinnenschenkeln verbunden sein. Auch können die Enden der Geräteträgerschenkel nach innen weisende Einhängehaken aufweisen, welche in Durchbrüche der Kabelrinnenschenkel einhängbar, optional zusätzlich oder alternativ einrastbar, sind.

Das elektrische Gerät kann auf alle fachüblichen Weisen mit elektrischer Energie versorgt werden. Beispielsweise kann das elektrische Gerät mittels einer im Geräteträger angeordneten Batterie, optional wieder aufladbar, mit elektrischer Energie versorgt werden. Ebenso kann das elektrische Gerät über eine in oder an der Kabelrinne angeordnete Stromversorgungsleitung mit elektrischer Energie versorgt werden. Das elektrische Gerät kann mittels eines am Geräteträger oder in der Stromversorgungsleitung angeordneten Schalter (oder Regler/Dimmer) an- und ausgeschaltet (oder geregelt/gedimmt) werden kann, oder mittels eines im Geräteträger angeordneten Funkempfängers durch Betätigung eines Funksenders an- und ausgeschaltet (oder geregelt/gedimmt) werden kann. Es versteht sich, dass bei einem Schalter oder Regler/Dimmer in der Stromversorgungsleitung dieser nicht in der Kabelrinne angeordnet, sondern dass die Stromversorgungsleitung hierzu an geeigneter Stelle aus der Kabelrinne heraus geführt ist.

Bei elektrischen Geräten, welche Sensoren sind, oder welche elektrische Signale akustisch oder optisch abstrahlen, sind selbstverständlich auch Zu- und/oder Ableitungen für elektrische Signale vorsehbar.

Die Stromversorgungsleitungen und/oder Leitungen zur Steuerung der elektrischen Geräte in der Kabelrinne können vorbereitet und vorverdrahtet sein, ggf. mit elektrischen Anschlüssen und/oder lösbaren elektrischen Steckverbindern versehen, so dass ein elektrisches Gerät werkzeuglos an beliebiger Position an der Kabelrinne angebracht und auch elektrisch angeschlossen werden kann. Dann wird es sich empfehlen, dass die elektrischen Anschlüsse und/oder Steckverbinder in Längsrichtung der Kabelrinne in weiten Bereichen positionierbar sind. Es ist auch möglich in der Kabelrinne in Längsrichtung der Kabelrinne verlaufende Stromanschlußschienen und am Geräteträger komplementäre Stromabnehmer vorzusehen, wobei die Stromabnehmer im Zuge des Anbringens des Geräteträgers an der Kabelrinne die Stromanschlußschienen kontaktieren, beispielsweise im Bereich der freien Enden der Kabelrinnenschenkel.

Im Folgenden wird die Erfindung anhand von lediglich Ausführungsbeispiele darstellenden Figuren näher erläutert. In den Ausführungsbeispielen ist im Wesentlichen auf Beleuchtungsmittel als elektrische Geräte abgestellt, sie lassen sich aber ganz analog auch für andere elektrische Geräte realisieren. Es zeigen:
- Fig. 1: eine Schrägansicht einer ersten Ausführungsform der Erfindung,
- Fig. 2:: einen Querschnitt durch den Gegenstand der Figur 1,
- Fig. 3:: eine Schrägansicht einer zweiten Ausführungsform der Erfindung,
- Fig. 4:: einen Querschnitt durch den Gegenstand der Figur 3,
- Fig. 5:: eine Schrägansicht einer dritten Ausführungsform der Erfindung,
- Fig. 6:: einen Querschnitt durch den Gegenstand der Figur 5,
- Fig. 7:: eine Seitenansicht einer vierten Ausführungsform der Erfindung,
- Fig. 8:: eine Seitenansicht einer fünften Ausführungsform der Erfindung und
- Figur 9:: eine Querschnittsansicht (Fig. 9a) einer sechsten Ausführungsform und eine Seiten(innen)Ansicht des Geräteträgers (Fig. 9b) dieser Ausführungsform.

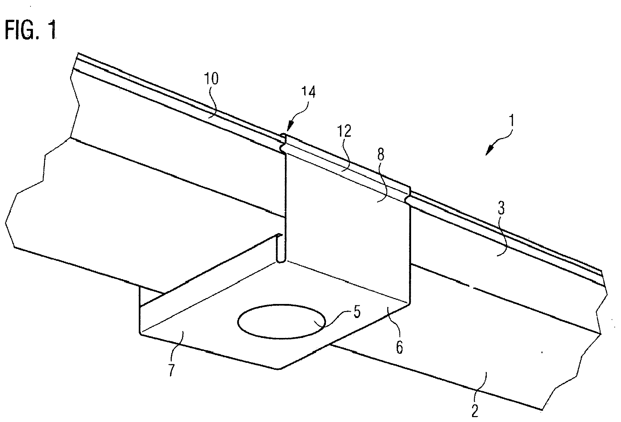

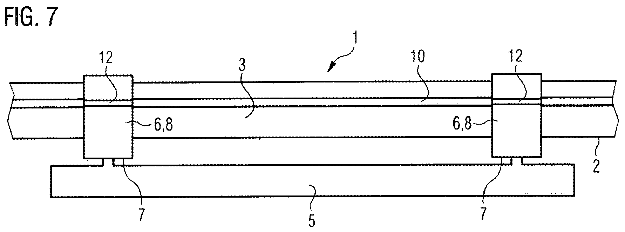

In den Figuren 1 bis 7, erkennt man zunächst eine Kabelrinne 1 mit einem Kabelrinnenboden 2 und zwei Kabelrinnenschenkel 3, 4, wobei der Kabelrinnenboden 2 und die Kabelrinnenschenkel 3, 4 im Querschnitt U-förmig ausgebildet sind. Des Weiteren gemeinsam ist allen Ausführungsformen der Figuren 1 bis 7, dass ein Beleuchtungsmittel 5 an der Kabelrinne 1 angebracht ist. Im Einzelnen ist zu erkennen, dass das Beleuchtungsmittel 5 in oder an einem Geräteträger 6 angeordnet ist, und dass der Geräteträger 6 kraft- und/oder formschlüssig mit den Kabelrinnenschenkeln 3, 4 reversibel verbunden ist.

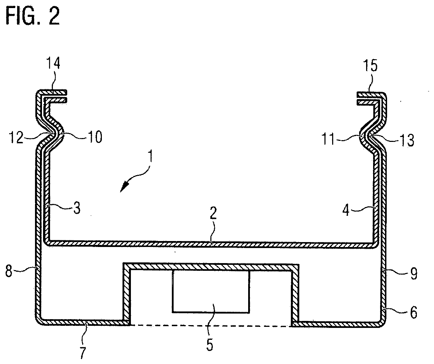

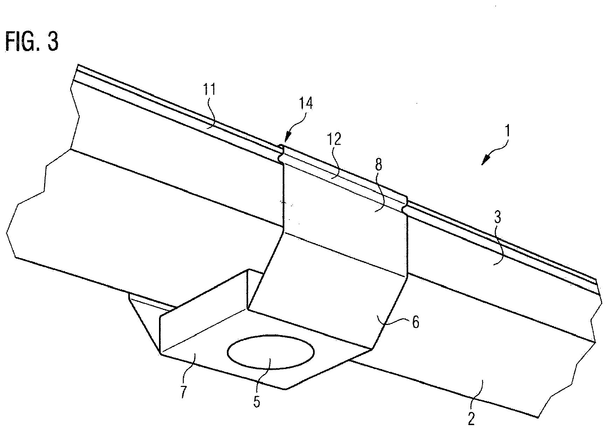

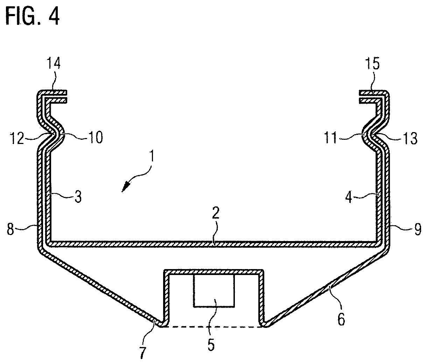

Der Geräteträger 6 ist in den Ausführungsformen der Figuren 1 bis 7 im Querschnitt senkrecht zur Längserstreckung der Kabelrinne 1 U- (siehe Figuren 1 und 2) oder V-förmig (siehe Figuren 3 und 4) mit einem Geräteträgerboden 7 und zwei Geräteträgerschenkeln 8, 9 ausgebildet. Die Geräteträgerschenkel 8, 9 sind in den Bereichen ihrer freien Enden zum Anliegen an die Kabelrinnenschenkel (3, 4) ausgebildet und insofern in diesen Bereichen im Wesentlichen parallel zueinander. Das Beleuchtungsmittel 5 ist im oder an dem Geräteträgerboden 7 angeordnet. Die Geräteträgerschenkel 8, 9 sind mit den Kabelrinnenschenkeln 3, 4 kraft- und/oder formschlüssig verbunden, wozu im Einzelnen auf die folgende Beschreibung verwiesen wird.

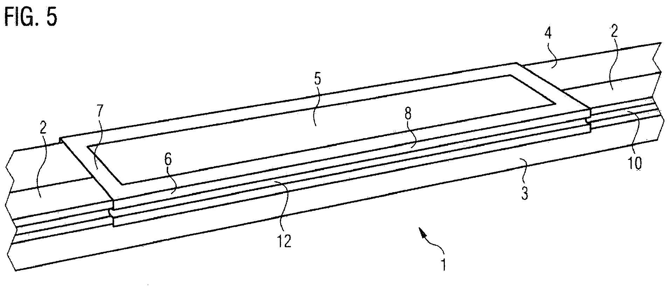

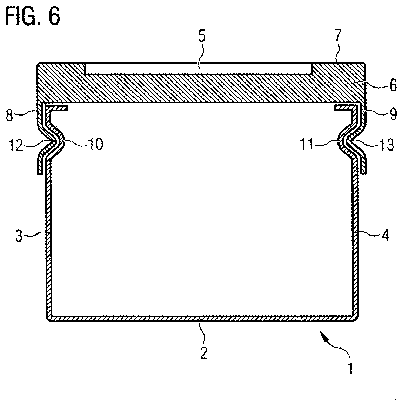

Den Ausführungsformen der Figuren 1 bis 4 und 7 ist gemeinsam, dass der Geräteträgerboden 7 unterhalb des Kabelrinnenbodens 2 angeordnet ist, während in der Ausführungsform der Figuren 5 und 6 der Geräteträgerboden 7 oberhalb von freien Enden der Kabelrinnenschenkel 3, 4 angeordnet ist. Dabei weist die Abstrahlrichtung des Beleuchtungsmittels 5 in den Figuren 1 bis 4 und 7 vom Kabelrinnenboden 2 weg und nach unten, in den Figuren 5 und 6 dagegen nach oben.

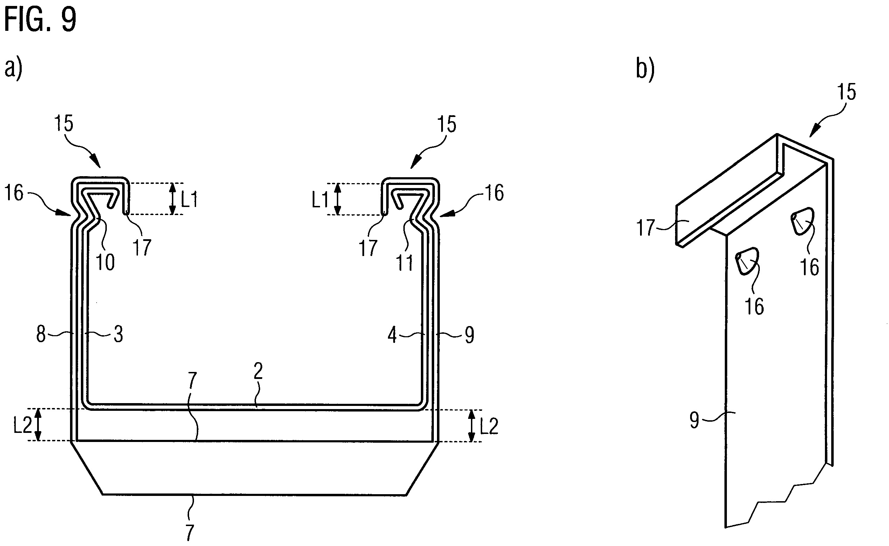

Die Kabelrinnenschenkel 3, 4 weisen in allen Ausführungsformen benachbart zu den freien Enden der Kabelrinnenschenkel 3, 4 und in Längsrichtung der Kabelrinne 1 verlaufend jeweils eine zum Innenraum der Kabelrinne 1 weisende Kabelrinnensicke 10, 11 auf. Die Geräteträgerschenkel 8, 9 weisen ihrerseits benachbart zu den freien Enden der Geräteträgerschenkel 8, 9 und in Längsrichtung der Kabelrinne 1 verlaufend jeweils eine zum Innenraum des Geräteträgers 6 weisende Geräteträgersicke 12, 13 auf, welche im Wesentlichen komplementär zu den Kabelrinnensicken 10, 11 sind, so dass dass die Innenseiten der Geräteträgersicken 12, 13 in die Außenseiten der Kabelrinnensicken 10, 11 eingreifen. Je nach Form der Sicken im Querschnitt liegen dann echte Formschlussverbindungen vor oder eher Kraftschlussverbindung. In den Ausführungsbeispielen ist zusätzlich eingerichtet, dass die freien Enden der Geräteträgerschenkel 8, 9 jeweils eine nach innen weisende L-förmige oder (in den Figuren 1 bis 8 nicht dargestellt, siehe aber auch Figur 9a) U-förmige Abkantung 14, 15 aufweisen, welche die freien Enden der Kabelrinnenschenkel 3, 4 übergreift oder umgreift. Hierdurch ist eine (lösbare) Formschlussverbindung eingerichtet.

Bei Einsatz von Kabelrinnen 1 ohne Kabelrinnensicken 10, 11 wird es sich empfehlen, dass auch die Geräteträgerschenkel 8, 9 keine Geräteträgersicken 12, 13 aufweisen.

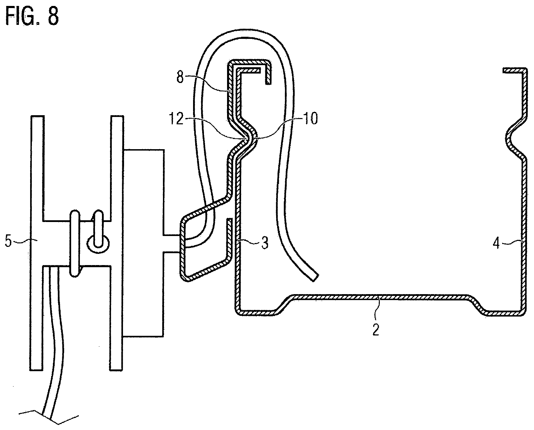

In dem Ausführungsbeispiel der Figur 8 ist ein Geräteträger 6 bestehend aus lediglich einem Geräteträgerschenkel 8 dargestellt. An diesem ist seitlich ein elektrisches Gerät 5, hier eine Kabeltrommel 5 (aber auch andere elektrische Geräte 5, wie Beleuchtungsmittel 5 sind einsetzbar), angebracht. Der Geräteträgerschenkel 8 ist dabei mit einen Kabelrinnenschenkel 3 formschlüssig verbunden, beispielsweise daran eingehängt.

In der Figur 9a erkennt man eine Kabelrinne 1 mit einem Aufbau, der den Kabelrinnen 1 der vorhergehend beschriebenen Ausführungsformen entspricht. Der Geräteträger 6 entspricht im Kern der Ausführungsform der Figuren 1 und 2, weicht jedoch in dem folgend beschriebenen Detail hiervon ab. An die Stelle der Geräteträgersicken 12, 13 treten in dieser Ausführungsform benachbart zu den freien Enden der Geräteträgerschenkel 8, 9 jeweils zwei zum Innenraum des Geräteträgers 6 weisende konvexe Ausformungen 16, wozu ergänzend auf die Figur 9b verwiesen wird. Diese nach innen weisenden Ausformungen 16 greifen im montierten Zustand des Geräteträgers 6 in die Außenseiten der Kabelrinnensicken 10, 11 ein. Die Ausformungen 16 im Beispiel weisen eine spitze Kegelform auf, wobei die Mantellinien herstellungsbedingt (Körnerschlag von außen) konkav verlaufend sind.

Insbesondere der Figur 9a sind bevorzugte Dimensionierungen für Varianten eines Geräteträgers 6 mit einem Geräteträgerboden 7 und zwei Geräteträgerschenkeln 8, 9, mit Geräteträgersicken 12, 13 oder Ausformungen in den Geräteträgerschenkeln 8, 9 und mit (zum Geräteträgerboden 7 hin offenen) U-förmigen Abkantungen 15 an den freien Enden der Geräteträgerschenkel 8, 9 dargestellt. So kann eine Umgreifungslänge L1 gleich oder kleiner einer Abstandslänge L2 sein, wobei die Umgreifungslänge L1 durch die Länge L1 der innenliegenden Schenkel 17 der U-förmigen Abkantungen 15 an den freien Enden der Geräteträgerschenkel 8, 9, im Querschnitt orthogonal zur Längserstreckung der Kabelrinne 1 betrachtet, und die Abstandslänge L2 durch den minimalen Abstand L2 einer Oberseite des Geräteträgerbodens 7 zu einer Unterseite des Kabelrinnenbodens 2, im Querschnitt orthogonal zur Längserstreckung der Kabelrinne 1 betrachtet, gegeben sind.

## Patentansprüche

1. Kabelrinne (1) mit einem Kabelrinnenboden (2) und zwei Kabelrinnenschenkel (3, 4), wobei der Kabelrinnenboden (2) und die Kabelrinnenschenkel (3, 4) im Querschnitt U-förmig ausgebildet sind, wobei ein elektrisches Gerät (5), insbesondere ein Beleuchtungsmittel (5), an oder in der Kabelrinne (1) angebracht ist,
**dadurch gekennzeichnet,**
**dass** das elektrische Gerät (5) in oder an einem Geräteträger (6) angeordnet ist, und
**dass** der Geräteträger (6) kraft- und/oder formschlüssig mit den Kabelrinnenschenkeln (3, 4) reversibel verbindbar ist.

2. Kabelrinne (1) nach Anspruch 1, **dadurch gekennzeichnet, dass** der Geräteträger (6) im Querschnitt senkrecht zur Längserstreckung der Kabelrinne (1) U- oder V-förmig mit einem Geräteträgerboden (7) und zwei Geräteträgerschenkeln (8, 9) ausgebildet ist, wobei die Geräteträgerschenkel (8, 9) in den Bereichen ihrer freien Enden zum Anliegen an die Kabelrinnenschenkel (3, 4) ausgebildet sind, wobei das elektrische Gerät (5) im oder an dem Geräteträgerboden (7) angeordnet ist, und wobei die Geräteträgerschenkel (8, 9) mit den Kabelrinnenschenkel (3, 4) kraft- und/oder formschlüssig verbunden sind.

3. Kabelrinne (1) nach einem der Ansprüche 1 oder 2, **dadurch gekennzeichnet, dass** der Geräteträgerboden (7) unterhalb des Kabelrinnenbodens (2) oder oberhalb von freien Enden der Kabelrinnenschenkel (3, 4) angeordnet ist.

4. Kabelrinne (1) nach einem der Ansprüche 1 bis 3 in der Ausführungsform mit einem Beleuchtungsmittel (5) als elektrisches Gerät (5), **dadurch gekennzeichnet, dass** die Abstrahlrichtung des Beleuchtungsmittels (5) vom Kabelrinnenboden (2) weg, nach oben oder nach unten, weist.

5. Kabelrinne (1) nach einem der Ansprüche 1 bis 4, **dadurch gekennzeichnet, dass** die Kabelrinnenschenkel (3, 4) benachbart zu den freien Enden der Kabelrinnenschenkel (3, 4) und in Längsrichtung der Kabelrinne (1) verlaufend jeweils zumindest eine zum Innenraum der Kabelrinne (1) weisende Kabelrinnensicke (10, 11) aufweisen.

6. Kabelrinne (1) nach einem der Ansprüche 1 bis 5, **dadurch gekennzeichnet, dass** die Geräteträgerschenkel (8, 9) benachbart zu den freien Enden der Geräteträgerschenkel (8, 9) und in Längsrichtung der Kabelrinne (1) verlaufend jeweils zumindest eine zum Innenraum des Geräteträgers (6) weisende Geräteträgersicke (12, 13) aufweisen, und dass die Innenseiten der Geräteträgersicken (12, 13) in die Außenseiten der Kabelrinnensicken (10, 11) eingreifen.

7. Kabelrinne (1) nach einem der Ansprüche 1 bis 6, **dadurch gekennzeichnet, dass** die freien Enden der Geräteträgerschenkel (8, 9) jeweils eine nach innen weisende Abkantung (14, 15) aufweisen, welche die freien Enden der Kabelrinnenschenkel (3, 4) übergreift oder umgreift.

8. Kabelrinne (1) nach einem der Ansprüche 1 bis 7, **dadurch gekennzeichnet, dass** das elektrische Gerät (5), insbesondere das Beleuchtungsmittel (5), mittels einer im Geräteträger (6) angeordneten Batterie, optional wieder aufladbar, mit elektrischer Energie versorgt wird.

9. Kabelrinne (1) nach einem der Ansprüche 1 bis 7, **dadurch gekennzeichnet, dass** das elektrische Gerät (5), insbesondere das Beleuchtungsmittel (5), über eine in oder an der Kabelrinne (1) angeordnete Stromversorgungsleitung mit elektrischer Energie versorgt wird.

10. Kabelrinne (1) nach einem der Ansprüche 1 bis 9, **dadurch gekennzeichnet, dass** das elektrische Gerät (5), insbesondere das Beleuchtungsmittel (5), mittels eines am Geräteträger (6) oder in der Stromversorgungsleitung angeordneten Schalter an- und ausgeschaltet werden kann, oder mittels eines im Geräteträger (6) angeordneten Funkempfängers durch Betätigung eines Funksenders an- und ausgeschaltet werden kann.
